# EUROPÄISCHE PATENTSCHRIFT

(11) **EP 2 350 927 B1**
(45) Veröffentlichungstag und Bekanntmachung des Hinweises auf die Patenterteilung: **12.12.2012**
(21) Anmeldenummer: 09743867.5
(22) Anmeldetag: 26.10.2009
(51) Int. Cl.: G06K 17/00, G07F 7/10, G06K 19/073

(54) **VERFAHREN UND SYSTEM ZUR PERSONALISIERUNG EINES TRAGBAREN DATENTRÄGERS**
METHOD AND SYSTEM FOR PERSONALIZING A PORTABLE DATA STORAGE DEVICE
PROCÉDÉ ET SYSTÈME DE PERSONNALISATION D'UN SUPPORT DE DONNÉES PORTATIF

(30) Priorität: 27.10.2008 DE 102008053366
(43) Veröffentlichungstag der Anmeldung: 03.08.2011
(73) Patentinhaber: Giesecke & Devrient GmbH, 81677 München (DE)
(72) Erfinder: EFFING, Wolfgang, 85659 Forstern (DE); SPITZ, Stephan, 81247 München (DE); MARTINI, Ullrich, 81669 München (DE)
(86) Internationale Anmeldenummer: PCT/EP2009/007652
(87) Internationale Veröffentlichungsnummer: WO 2010/049110

(56) Entgegenhaltungen:
- WO-A-2005/010810

## Beschreibung

Die Erfindung betrifft ein Verfahren und ein System zur Personalisierung eines tragbaren Datenträgers, insbesondere einer Chipkarte.

Bei der Personalisierung von tragbaren Datenträgern werden heutzutage häufig biometrische Daten verwendet, welche eine eindeutige Zuordnung des Datenträgers zu einer entsprechenden Person ermöglichen. Biometrische Daten stellen dabei hochsensible personenspezifische Informationen dar, welche zwecks Vermeidung von Missbrauch nicht unbefugt an Dritte weitergegeben werden dürfen.

Aus dem Dokument WO 2005/010810 A1 ist es bekannt, biometrische Daten eines Benutzers unter Aufsicht einer Registrierungsstelle zu erfassen und einem Personalisierer zu übermitteln. Die biometrischen Daten werden von dem Personalisierer auf einen tragbaren Datenträger geschrieben und der derart personalisierte Datenträger wird an eine Registrierungsbehörde zurückgegeben. Bei der Registrierungsbehörde präsentiert der Benutzer nochmals seine biometrischen Daten, welche mit den auf dem Datenträger gespeicherten biometrischen Daten verglichen werden. Bei einem ausreichenden Grad an Übereinstimmung erfolgt eine Aktivierung des Datenträgers für dessen Benutzung.

Bei den bekannten Verfahren zur Personalisierung eines Datenträgers erweist es sich als nachteilhaft, dass die hochsensiblen biometrischen Daten an ein Personalisierungssystem übermittelt werden. Die biometrischen Daten liegen somit zentral im Personalisierungssystem vor, was die Möglichkeit eines Missbrauchs durch Dritte eröffnet, welche sich unberechtigt Zugang zu den im Personalisierungssystem abgelegten biometrischen Daten verschaffen.

Aufgabe der Erfindung ist es deshalb, ein Verfahren und ein System zur Personalisierung eines tragbaren Datenträgers zu schaffen, bei dem der Zugriff auf die biometrischen Daten erschwert wird und somit die Sicherheit bei der Personalisierung erhöht wird.

Diese Aufgabe wird durch das Verfahren gemäß Patentanspruch 1 bzw. das System gemäß Patentanspruch 11 gelöst. Weiterbildungen der Erfindung sind in den abhängigen Ansprüchen definiert.

In dem erfindungsgemäßen Verfahren wird in einem Schritt a) ein biometrischer Datensatz eines Benutzers erfasst und aus dem biometrischen Datensatz wird mit einem vorgegebenen Berechnungsverfahren ein Identifikationswert berechnet, welcher eindeutig dem biometrischen Datensatz zugeordnet ist und aus welchem der biometrische Datensetz nicht abgeleitet werden kann. Anschließend wird der Identifikationswert in einem Personalisierungssystem, dem der Identifikationswert übermittelt wurde, auf einem tragbaren Datenträger gespeichert. Schließlich wird in einem Schritt c) nach Übermittlung des tragbaren Datenträgers von dem Personalisierungssystem an den Benutzer oder an eine Ausgabestelle ein biometrischer Datensatz einer Person erneut erfasst. Diese Person ist insbesondere ein Benutzer, von dem angenommen wird, dass dessen biometrischer Datensatz auch in Schritt a) erfasst wurde. Die Person stellt somit den vermeitlich berechtigen Benutzer des Datenträgers dar. Aus dem erneut erfassten biometrischen Datensatz wird mit dem vorgegebenen Berechnungsverfahren erneut ein Identifikationswert berechnet, der mit dem auf dem tragbaren Datenträger gespeicherten Identifikationswert verglichen wird, wobei im Falle einer ausreichenden Übereinstimmung zwischen den Identifikationswerten, insbesondere im Falle einer Identität der beiden Identifikationswerte, der erneut erfasste biometrische Datensatz auf dem tragbaren Datenträger gespeichert wird.

Der Schritt c) stellt somit eine Nachpersonalisierung dar, bei welcher der tragbare Datenträger durch den erneut erfassten biometrischen Datensatz personalisiert wird. Der Schritt c) kann dabei unmittelbar von dem Benutzer, beispielsweise mit Hilfe eines Sensors zur Erfassung der entsprechenden biometrischen Daten an einem Endgerät des Benutzers, durchgeführt werden. Ebenso kann die Personalisierung an einer Ausgabestelle für den Datenträger, beispielsweise bei einer Registrierungsbehörde, vorgenommen werden, bei welcher der Benutzer seinen biometrischen Datensatz nochmals repräsentiert.

Das erfindungsgemäße Verfahren zeichnet sich dadurch aus, dass dezentral eine Personalisierung des Datenträgers mit biometrischen Daten erfolgt, ohne dass die biometrischen Daten in einem zwischengeschalteten Personalisierungssystem hinterlegt sind. Das Personalisierungssystem dient erfindungsgemäß lediglich zur Vorpersonalisierung mit einem biometrischen Identifikationswert, aus dem nicht der biometrische Datensatz abgeleitet werden kann, dem der biometrische Identifikationswert zu Grunde liegt. Erfindungsgemäß wird somit sichergestellt, dass biometrische Daten eines Benutzers nicht dem Personalisierungssystem bereitgestellt werden, wodurch die Sicherheit bei der Personalisierung erhöht wird.

Der Identifikationswert ist in einer bevorzugten Ausführungsform eine biometrische PIN (PIN = Personal Identification Number) in der Form einer mehrstelligen Zeichenkombination, insbesondere einer Ziffern- und/oder Buchstabenkombination. Beispielsweise kann eine vierstellige, fünfstellige, sechsstellige oder gegebenenfalls auch höherstellige Zeichenkombination verwendet werden.

In einer weiteren bevorzugten Variante des erfindungsgemäßen Verfahrens wird der in Schritt a) berechnete Identifikationswert elektronisch an das Personalisierungssystem übermittelt. Diese Übermittlung kann verschlüsselt erfolgen. Eine Verschlüsselung ist jedoch nicht zwangsläufig erforderlich, da aus dem Identifikationswert nicht der biometrische Datensatz abgeleitet werden kann, der dem Identifikationswert zu Grunde liegt.

In einer weiteren, bevorzugten Variante des erfindungsgemäßen Verfahrens wird der in Schritt a) berechnete Identifikationswert dem Benutzer über ein Ausgabemittel, insbesondere ein Display, ausgegeben, wobei der Benutzer die Übermittlung des ausgegebenen Identifikationswerts an das Personalisierungssystem veranlasst. Hierdurch wird die Sicherheit des Systems erhöht, da der Benutzer selbst bestimmt, zu welchem Zeitpunkt und auf welche Weise der ausgegebene Identifikationswert an das Personalisierungssystem übermittelt wird.

Um die Sicherheit des Verfahrens weiter zu erhöhen, wird in einer besonders bevorzugten Variante der in Schritt a) erfasste biometrische Datensatz nach der Berechnung des Identifikationswerts gelöscht, so dass kein Missbrauch des biometrischen Datensatzes durch Dritte erfolgen kann.

In einer weiteren Ausführungsform des erfindungsgemäßen Verfahrens werden in dem Personalisierungssystem neben dem Identifikationswert weitere Benutzerdaten auf dem tragbaren Datenträger gespeichert, so dass nach Abschluss der Personalisierung sofort relevante Benutzerdaten für den Einsatz des Datenträgers zur Verfügung stehen und nicht separat auf den Datenträger geladen werden müssen. Die Benutzerdaten können dabei dem Personalisierungssystem zusammen mit dem Identifikationswert übermittelt werden. Gegebenenfalls können die Benutzerdaten auch in einem separaten Übermittlungsschritt an das Personalisierungssystem übertragen werden.

In einer weiteren, bevorzugten Ausführungsform des erfindungsgemäßen Verfahrens wird der Schritt a) mehrmals wiederholt, wodurch mehrere Identifikationswerte erhalten werden, wobei derjenige Identifikationswert in Schritt b) weiterverwendet wird, der am häufigsten in Schritt a) ermittelt wurde. Es wird somit die Generierung des Identifikationswerts gemäß Schritt a) mehrfach redundant durchgeführt, wodurch berücksichtigt wird, dass bei der Erfassung des biometrischen Datensatzes und der Berechnung des Identifikationswerts Toleranzen auftreten können, welche dazu führen, dass gelegentlich Abweichungen bei der Berechnung des Identifikationswerts auftreten.

In einer weiteren Variante des erfindungsgemäßen Verfahrens kann im Falle einer nicht ausreichenden Übereinstimmung zwischen den Identitikationswerten in Schritt c) die Erfassung des biometrischen Datensatzes und die Berechnung des Identifikationswerts eine vorbestimmte Anzahl von Malen wiederholt werden, wobei nach jeder Wiederholung der erneut erfasste Identifikationswert nochmals mit dem auf dem Datenträger gespeicherten Identifikationswert verglichen wird, um im Falle einer ausreichenden Übereinstimmung zwischen den Identifikationswerten den erneut erfassten biometrischen Datensatz, aus dem der erneut erfasste Identifikationswert berechnet wurde, auf dem tragbaren Datenträger zu speichern. Diese Variante der Erfindung entspricht einem Hochsetzen eines Fehlbedienungszählers, wodurch wiederum berücksichtigt wird, dass Toleranzen bei der erneuten Berechnung des Identifikationswerts auftreten können. Demzufolge wird der Identifikationswert in Schritt c) gegebenenfalls mehrmals bestimmt, um sicherzugehen, dass eine Abweichung zwischen den Identifikationswerten tatsächlich ihre Ursache darin hat, dass in Schritt c) die biometrischen Daten einer unberechtigten Person repräsentiert wurden.

In einer weiteren Variante des erfindungsgemäßen Verfahrens wird der auf dem tragbaren Datenträger gespeicherte Identifikationswert beim oder nach dem Speichern des biometrischen Datensatzes in Schritt c) von dem tragbaren Datenträger gelöscht, denn der Identifikationswert wird bei der weiteren Verwendung des tragbaren Datenträgers im Regelfall nicht mehr benötigt. Insbesondere erfolgt dabei ein Überschreiben des Identifikationswerts mit dem biometrischen Datensatz.

In dem erfindungsgemäßen Verfahren können als biometrischer Datensatz in Schritt a) bzw. in Schritt c) beliebige biometrische Daten sensiert werden und daraus der biometrische Datensatz abgeleitet werden. Vorzugsweise wird der biometrische Datensatz aus einem Fingerabdruck und/oder einem Iris-Scan einer Person generiert. Der biometrische Datensatz stellt dabei im Regelfall nicht die sensierten biometrischen Rohdaten dar, sondern wurde geeignet weiterverarbeitet, um einen biometrischen Merkmalssatz zu bilden. Bei der Erfassung von Fingerabdrücken ist der biometrische Datensatz insbesondere ein Template des Fingerabdrucks bzw. die Minutien des Fingerabdrucks.

Neben dem oben beschriebenen Verfahren umfasst die Erfindung ferner ein System zur Personalisierung eines tragbaren Datenträgers. Das System umfasst ein erstes Erfassungs- und Berechnungsmittel zum Erfassen eines biometrischen Datensatzes eines Benutzers und zum Berechnen eines eindeutig dem biometrischen Datensatz zugeordneten Identifikationswerts aus dem biometrischen Datensatz mit einem vorgegebenen Berechnungsverfahren, aus dem der biometrische Datensatz nicht abgeleitet werden kann. Darüber hinaus ist ein Personalisierungssystem zum Speichern des Identifikationswerts auf einem tragbaren Datenträger nach der Übermittlung des Identifikationswerts an das Personalisierungssystem vorgesehen. Ferner beinhaltet das System ein zweites Erfassungs- und Berechnungsmittel zum erneuten Erfassen eines biometrischen Datensatzes einer Person nach Übermittlung des tragbaren Datenträgers von dem Personalisierungssystem an den Benutzer oder eine Ausgabestelle, wobei mit dem zweiten Erfassungs- und Berechnungsmittel aus dem erneut erfassten biometrischen Datensatz mit dem vorgegebenen Berechnungsverfahren erneut ein Identifikationswert berechnet wird, der mit dem auf dem tragbaren Datenträger gespeicherten Identifikationswert verglichen wird, wobei im Falle einer ausreichenden Übereinstimmung zwischen den Identifikationswerten, insbesondere bei Identität der Identifikationswerte, der erneut erfasste biometrische Datensatz auf dem tragbaren Datenträger gespeichert wird. Gegebenenfalls kann es sich bei dem ersten und zweiten Erfassungs- und Berechnungsmittel um dasselbe Erfassungs- und Berechnungsmittel bzw. um ein Erfassungs- und Berechnungsmittel vom gleichen Typ handeln.

Das erfindungsgemäße System ist vorzugsweise derart ausgestaltet, dass mit dem System jede Variante des oben beschriebenen erfindungsgemäßen Verfahrens durchführbar ist. Das in dem System verwendete erste bzw. zweite Erfassungsmittel ist insbesondere in einem Endgerät des Benutzers, z.B. in einem Mobilfunkgerät, integriert. Auf diese Weise wird eine flexible Personalisierung durch einen Benutzer dezentral an einem beliebigen Aufenthaltsort des Benutzers ermöglicht, ohne dass der Benutzer seine biometrischen Daten an einer Ausgabestelle präsentieren muss.

Das in dem erfindungsgemäßen System eingesetzte Personalisierungssystem ist vorzugsweise eine zentrale Personalisierungsstelle, welche beispielsweise beim Hersteller des tragbaren Datenträgers vorgesehen ist. An dieses Personalisierungssystem können Identifikationswerte einer Vielzahl von verschiedenen Benutzern übermittelt werden. Obwohl eine zentrale Personalisierungsstelle vorhanden sein kann, wird in dem erfindungsgemäßen System der entsprechende biometrische Datensatz jedoch nur dezentral erfasst und nicht an die zentrale Personalisierungsstelle übermittelt.

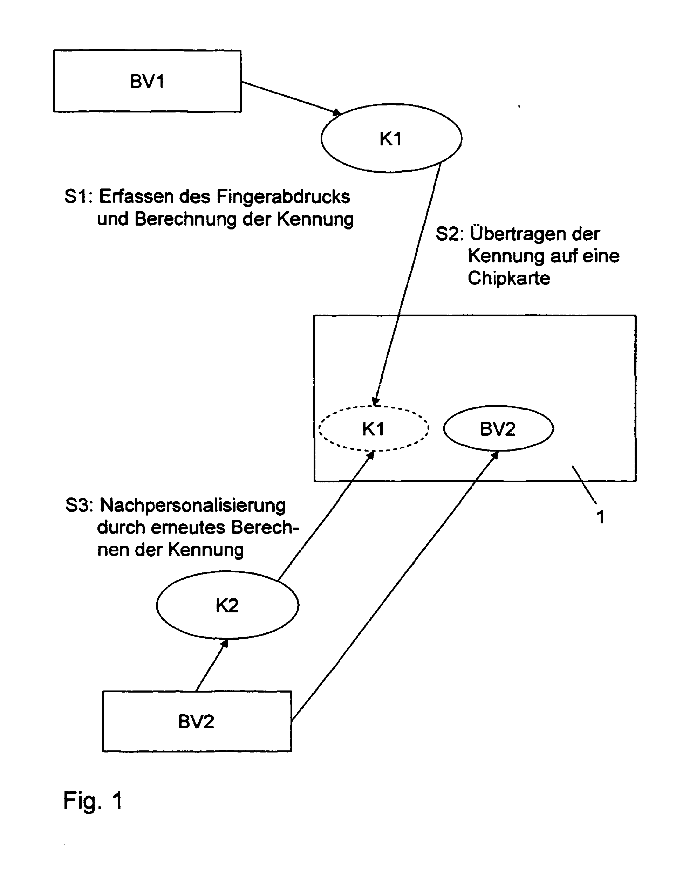

Die Erfindung wird nachfolgend anhand der Fig.1 detailliert beschrieben. Diese Figur zeigt in schematischer Darstellung den Ablauf einer Ausführungsform des erfindungsgemäßen Verfahrens zur Personalisierung einer Chipkarte.

In dem Ausführungsbeispiel der Fig.1 wird zunächst in einem ersten Schritt S1 der Fingerabdruck eines Benutzers erfasst, aus dem ein biometrischer Vektor BV1 generiert wird, der einen biometrischen Datensatz im Sinne des Anspruchs 1 darstellt. Die Erfassung des Fingerabdrucks und die damit verbundene Generierung des Vektors BV1 erfolgt über einen entsprechenden Fingerabdrucksensor. Aus dem biometrischen Vektor BV1 wird basierend auf einem vorgegebenen Berechnungsverfahren eine biometrische PIN in der Form einer ersten Kennung K1 berechnet. Entsprechende Verfahren zur Ableitung einer PIN aus einem biometrischen Vektor sind aus dem Stand der Technik bekannt und werden deshalb nicht im Detail erläutert. Bei der biometrischen PIN handelt es sich um eine Kennung, welche eindeutig dem biometrischen Vektor BV1 zugeordnet ist. Das heißt, wird aus dem biometrischen Vektor eines erfassten Fingerabdrucks einer anderen Person eine Kennung abgeleitet, unterscheidet sich diese Kennung von der Kennung K1.

Nach Ermittlung der PIN K1 wird der biometrische Vektor BV1 gelöscht, um Missbrauch durch unberechtigte Verwendung dieses Vektors zu vermeiden.

In einem nächsten Schritt S2 wird die Kennung K1 auf einen tragbaren Datenträger in der Form einer Chipkarte 1 übertragen. Hierzu wird die Kennung K1 an ein zentrales Personalisierungssystem übermittelt, welches die PIN auf der Chipkarte 1 speichert, wodurch die Chipkarte vorpersonalisiert wird. Das zentrale Personalisierungssystem ist dabei vorzugsweise beim Hersteller der Chipkarte 1 angeordnet. Die Vorpersonalisierung hat den großen Vorteil, dass nicht mehr der biometrische Vektor selbst übermittelt wird, sondern eine daraus abgeleitete biometrische Transport-PIN in der Form der Kennung K1. Diese PIN ist wesentlich weniger sensibel, da es sich dabei lediglich um eine kurze Kombination aus Ziffern und gegebenenfalls auch Buchstaben handelt, aus der nicht mehr die Information ableitbar ist, von welchem Fingerabdruck sie stammt.

Die PIN K1 kann auf beliebige Art und Weise an das zentrale Personalisierungssystem übermittelt werden. Beispielsweise kann die Kennung K1 unmittelbar nach deren Generierung über eine entsprechende Kommunikationsverbindung elektronisch an das zentrale Personalisierungssystem gesandt werden. Ebenso ist es möglich, dass der Fingerabdrucksensor, an dem der Benutzer seine biometrischen Daten präsentiert, lediglich über ein Display verfügt, auf welchem dem Benutzer die biometrische PIN angezeigt wird. In diesem Fall ist keine unmittelbare elektronische Übermittlung der PIN möglich. Hierdurch wird Missbrauch vermieden, da es keine Möglichkeit gibt, die erfassten Daten vom Benutzer unbemerkt an Dritte elektronisch weiterzuleiten. Der Benutzer, dem die PIN an dem Display präsentiert wurde, merkt sich diese Kennung und übermittelt sie selbst an das zentrale Personalisierungssystem, beispielsweise von zu Hause aus durch das Versenden einer entsprechenden Email.

Die Chipkarte 1 mit der darauf gespeicherten Kennung K1 wird anschließend an den Benutzer übermittelt. In einem Schritt S3 erfolgt schließlich eine Nachpersonalisierung der Chipkarte. Dies geschieht dadurch, dass der Benutzer seinen Fingerabdruck erneut einem Fingerabdrucksensor präsentiert, der daraus einen biometrischen Vektor BV2 ableitet. Mit dem gleichen Algorithmus, der im Schritt S1 zur Berechnung der Kennung K1 verwendet wurde, wird aus dem biometrischen Vektor BV2 wiederum eine Kennung K2 in der Form einer biometrische PIN abgeleitet. Falls der Fingerabdruck aus Schritt S1 von dem gleichen Benutzer wie der Fingerabdruck in Schritt S3 stammt, sind die beiden Kennungen K1 und K2 im Regelfall identisch. Es erfolgt deshalb ein Vergleich der Kennungen K1 und K2. Sollte festgestellt werden, dass diese Kennungen einander entsprechen, wird die Nachpersonalisierung dadurch abgeschlossen, dass der biometrische Vektor BV2 endgültig auf der Chipkarte 1 gespeichert wird und ferner die Kennung K1 von der Chipkarte K1 gelöscht wird. Auf diese Weise wird eine mit biometrischen Daten eines Benutzers persortalisierte Chipkarte geschaffen, wobei es bei der Personalisierung nicht notwendig war, die biometrischen Daten des Nutzers zentral, beispielsweise in dem oben beschriebenen zentralen Personalisierungssystem, vorzuhalten.

Ein Anwendungsbeispiel des erfindungsgemäßen Verfahrens ist die Personalisierung einer SIM-Karte eines Mobilfunkanbieters. Hierzu wird dezentral in einem Geschäft des Mobilfunkanbieters der Fingerabdruck eines Kunden mittels eines Fingerabdrucksensors erfasst und daraus die biometrische PIN K1 berechnet. Die PIN wird anschließend unmittelbar an das zentrale Personalisierungssystem übermittelt bzw. an einem Display des Fingerabdrucksensors angezeigt, woraufhin der Kunde selbst die Daten an das zentrale Personalisierungssystem überträgt.

In dem zentralen Personalisierungssystem wird die Kennung K1 sowie gegebenenfalls weitere Kundendaten auf der Karte gespeichert, wodurch die Karte vorpersonalisiert wird. Die Karte wird dann entweder wiederum an das Geschäft des Mobilfunkanbieters oder direkt an den Kunden ausgeliefert. Anschließend erfolgt die Nachpersonalisierung. Dies kann an dem Fingerabdrucksensor vorgenommen werden, der auch bei der Generierung der ursprünglichen Kennung K1 eingesetzt wurde. Ebenso ist es möglich, dass das Mobiltelefon des Kunden über einen eigenen Fingerabdrucksensor verfügt, mit dem basierend auf dem gleichen Algorithmus wie bei der Berechnung der Kennung K1 die entsprechende Kennung K2 aus dem Fingerabdruck des Kunden abgeleitet wird. In jedem Fall wird bei der Nachpersonalisierung die auf der Chipkarte gespeicherte Kennung K1 mit der generierten Kennung K2 verglichen. Sollten diese Kennungen übereinstimmen, wird die Nachpersonalisierung durch Speicherung des biometrischen Vektors BV2 auf der Chipkarte 1 abgeschlossen.

## Patentansprüche

1. Verfahren zur Personalisierung eines tragbaren Datenträgers (1), insbesondere einer Chipkarte, mit biometrischen Daten, bei dem:
a) ein biometrischer Datensatz (BV1) eines Benutzers erfasst wird und aus dem biometrischen Datensatz (BV1) mit einem vorgegebenen Berechnungsverfahren ein Identifikationswert (K1) berechnet wird, welcher eindeutig dem biometrischen Datensatz (BV1) zugeordnet ist und aus welchem der biometrische Datensatz (BV1) nicht abgeleitet werden kann;
b) nach Übermittlung des Identifikationswerts (K1) an ein Personalisierungssystem der Identifikationswert (K1) durch das Personalisierungssystem auf einem tragbaren Datenträger gespeichert wird;
c) nach Übermittlung des tragbaren Datenträgers (1) von dem Personalisierungssystem an den Benutzer oder an eine Ausgabestelle ein biometrischer Datensatz (BV2) einer Person erneut erfasst wird, wobei aus dem erneut erfassten biometrischen Datensatz (BV2) mit dem vorgegebenen Berechnungsverfahren erneut ein Identifikationswert (K2) berechnet wird, der mit dem auf dem tragbaren Datenträger (1) gespeicherten Identifikationswert (K1) verglichen wird, wobei im Falle einer ausreichenden Übereinstimmung zwischen den Identifikationswerten (K1, K2) der erneut erfasste biometrische Datensatz (BV2) auf dem tragbaren Datenträger (1) gespeichert wird.

2. Verfahren nach Anspruch 1, **dadurch gekennzeichnet, dass** der Identifikationswert (K1) eine mehrstellige Zeichenkombination, insbesondere eine Ziffern- und/ oder Buchstabenkombination, ist.

3. Verfahren nach Anspruch 1 oder 2, **dadurch gekennzeichnet, dass** der in Schritt a) erfasste biometrische Datensatz (BV1) nach der Berechnung des Identifikationswerts (K1) gelöscht wird.

4. Verfahren nach einem der vorhergehenden Ansprüche, **dadurch gekennzeichnet, dass** der in Schritt a) berechnete Identifikationswert (K1) elektronisch an das Personalisierungssystem übermittelt wird.

5. Verfahren nach einem der vorhergehenden Ansprüche, **dadurch gekennzeichnet, dass** der in Schritt a) berechnete Identifikationswert (K1) dem Benutzer über ein Ausgabemittel, insbesondere ein Display, ausgegeben wird, wobei der Benutzer die Übermittlung des ausgegebenen Identifikationswerts (K1) an das Personalisierungssystem veranlasst.

6. Verfahren nach einem der vorhergehenden Ansprüche, **dadurch gekennzeichnet, dass** in dem Personalisierungssystem neben dem Identifikationswert (K1) weitere Benutzerdaten auf dem tragbaren Datenträger (1) gespeichert werden.

7. Verfahren nach einem der vorhergehenden Ansprüche, **dadurch gekennzeichnet, dass** der Schritt a) mehrmals wiederholt wird, wodurch mehrere Identifikationswerte (K1) erhalten werden, wobei derjenige Identifikationswert (K1) in Schritt b) weiterverwendet wird, der am häufigsten ermittelt wurde.

8. Verfahren nach einem der vorhergehenden Ansprüche, **dadurch gekennzeichnet, dass** im Falle einer nicht ausreichenden Übereinstimmung zwischen den Identifikationswerten (K1, K2) in Schritt c) die Erfassung des biometrischen Datensatzes (BV2) und die Berechnung des Identifikationswerts (K2) eine vorbestimmte Anzahl von Malen wiederholt werden kann, wobei nach jeder Wiederholung der erneut berechnete Identifikationswert (K2) nochmals mit dem auf dem tragbaren Datenträger gespeicherten Identifikationswert (K1) verglichen wird, um im Falle einer ausreichenden Übereinstimmung zwischen den Identifikationswerten (K1, K2) den erneut erfassten biometrischen Datensatz (BV2), aus dem der erneut erfasste Identifikationswert (K2) berechnet wurde, auf dem tragbaren Datenträger (1) zu speichern.

9. Verfahren nach einem der vorhergehenden Ansprüche, **dadurch gekennzeichnet, dass** der auf dem tragbaren Datenträger (1) gespeicherte Identifikationswert (K1) beim oder nach dem Speichern des biometrischen Datensatzes (BV2) in Schritt c) von dem tragbaren Datenträger (1) gelöscht wird.

10. Verfahren nach einem der vorhergehenden Ansprüche, bei dem der biometrische Datensatz (BV1, BV2) in Schritt a) und/ oder Schritt c) aus einem Fingerabdruck und/oder einem Iris-Scan generiert wird.

11. System zur Personalisierung eines tragbaren Datenträgers (1), insbesondere einer Chipkarte, mit biometrischen Daten, umfassend:
- ein erstes Erfassungs- und Berechnungsmittel zum Erfassen eines biometrischen Datensatz (BV1) eines Benutzers und zum Berechnen eines eindeutig dem biometrischen Datensatz (BV1) zugeordneten Identifikationswerts (K1), aus dem der biometrische Datensatz (BV1) nicht abgeleitet werden kann, aus dem biometrischen Datensatz (BV1) mit einem vorgegebenen Berechnungsverfahren;
- ein Personalisierungssystem zum Speichern des Identifikationswerts (K1) auf einem tragbaren Datenträger (1) nach der Übermittlung des Identifikationswerts (K1) an das Personalisierungssystem;
- ein zweites Erfassungs- und Berechnungsmittel zum erneuten Erfassen eines biometrischen Datensatzes (BV2) einer Person nach Übermittlung des tragbaren Datenträgers (1) von dem Personalisierungssystem an den Benutzer oder eine Ausgabestelle, wobei mit dem zweiten Erfassungs- und Berechnungsmittel aus dem erneut erfassten biometrischen Datensatz (BV1) mit dem vorgegebenen Berechnungsverfahren erneut ein Identifikationswert (K2) berechnet wird, der mit dem auf dem tragbaren Datenträger (1) gespeicherten Identifikationswert (K1) verglichen wird, wobei im Falle einer ausreichenden Übereinstimmung zwischen den Identifikationswerten (K1, K2) der erneut erfasste biometrische Datensatz auf dem tragbaren Datenträger (1) gespeichert wird.

12. System nach Anspruch 11, **dadurch gekennzeichnet, dass** das System derart ausgestaltet ist, dass mit dem System ein Verfahren nach einem der Ansprüche 2 bis 10 durchführbar ist.

13. System nach Anspruch 11 oder 12, **dadurch gekennzeichnet, dass** das erste und/oder zweite Erfassungs- und Berechnungsmittel in einem Endgerät, insbesondere einem Mobilfunkgerät, integriert sind.

14. System nach einem der Ansprüche 11 bis 13, **dadurch gekennzeichnet, dass** das Personalisierungssystem eine zentrale Personalisierungsstelle ist, an welche Identifikationswerte (K1, K2) einer Vielzahl von verschiedenen Benutzern übermittelt werden.

## Claims

1. A method for personalizing a portable data carrier (1), in particular a chip card, with biometric data, wherein:
a) a user's biometric data set (BV1) is captured and there is calculated from the biometric data set (BV1) by a given method of calculation an identification value (K1) which is uniquely associated with the biometric data set (BV1) and from which the biometric data set (BV1) cannot be derived;
b) after transfer of the identification value (K1) to a personalization system, the identification value (K1) is stored by the personalization system on a portable data carrier;
c) after transfer of the portable data carrier (1) from the personalization system to the user or to an issuing office, a person's biometric data set (BV2) is recaptured, wherein there is again calculated from the recaptured biometric data set (BV2) by the given method of calculation an identification value (K2), which is compared with the identification value (K1) stored on the portable data carrier (1), wherein in case of a sufficient match between the identification values (K1, K2) the recaptured biometric data set (BV2) is stored on the portable data carrier (1).

2. The method according to claim 1, **characterized in that** the identification value (K1) is a multi-digit character combination, in particular a combination of numbers and/or letters.

3. The method according to claim 1 or 2, **characterized in that** the biometric data set (BV1) captured in step a) is erased after the calculation of the identification value (K1).

4. The method according to any of the preceding claims, **characterized in that** the identification value (K1) calculated in step a) is transferred to the personalization system electronically.

5. The method according to any of the preceding claims, **characterized in that** the identification value (K1) calculated in step a) is output to the user via an output means, in particular a display, wherein the user causes the transfer of the output identification value (K1) to the personalization system.

6. The method according to any of the preceding claims, **characterized in that** further user data are stored on the portable data carrier (1) besides the identification value (K1) in the personalization system.

7. The method according to any of the preceding claims, **characterized in that** the step a) is repeated several times, thereby obtaining several identification values (K1), wherein that identification value (K1) is used further in step b) that was ascertained most frequently.

8. The method according to any of the preceding claims, **characterized in that** in case of an insufficient match between the identification values (K1, K2) in step c) the capture of the biometric data set (BV2) and the calculation of the identification value (K2) can be repeated a predetermined number of times, wherein after each repetition the recalculated identification value (K2) is again compared with the identification value (K1) stored on the portable data carrier, in order to store on the portable data carrier (1), in case of a sufficient match between the identification values (K1, K2), the recaptured biometric data set (BV2) from which the recaptured identification value (K2) was calculated.

9. The method according to any of the preceding claims, **characterized in that** the identification value (K1) stored on the portable data carrier (1) is erased from the portable data carrier (1) upon or after the storage of the biometric data set (BV2) in step c).

10. The method according to any of the preceding claims, wherein the biometric data set (BV1, BV2) is generated from a fingerprint and/or an iris scan in step a) and/or step c).

11. A system for personalizing a portable data carrier (1), in particular a chip card, with biometric data, comprising:
- a first capture and calculation means for capturing a user's biometric data set (BV1) and for calculating an identification value (K1), which is uniquely associated with the biometric data set (BV1) and from which the biometric data set (BV1) cannot be derived, from the biometric data set (BV1) by a given method of calculation;
- a personalization system for storing the identification value (K1) on a portable data carrier (1) after the transfer of the identification value (K1) to the personalization system;
- a second capture and calculation means for recapturing a person's biometric data set (BV2) after transfer of the portable data carrier (1) from the personalization system to the user or an issuing office, wherein there is again calculated from the recaptured biometric data set (BV1) with the second capture and calculation means by the given method of calculation an identification value (K2) which is compared with the identification value (K1) stored on the portable data carrier (1), wherein in case of a sufficient match between the identification values (K1, K2) the recaptured biometric data set is stored on the portable data carrier (1).

12. The system according to claim 11, **characterized in that** the system is configured such that a method according to any of claims 2 to 10 can be carried out with the system.

13. The system according to claim 11 or 12, **characterized in that** the first and/or second capture and calculation means are integrated in an end device, in particular a mobile phone.

14. The system according to any of claims 11 to 13, **characterized in that** the personalization system is a central personalization place to which identification values (K1, K2) of a multiplicity of different users are transferred.

## Revendications

1. Procédé de personnalisation d'un support de données portable (1), notamment d'une carte à puce, avec des données biométriques, dans lequel :
a) un jeu de données biométrique (BV1) d'un utilisateur est saisi et, à partir du jeu de données biométrique (BV1), avec une méthode de calcul donnée, une valeur d'identification (K1) affectée univoquement au jeu de données biométrique (BV1) et dont le jeu de données biométrique (BV1) ne peut pas être déduit est calculée;
b) après transmission de la valeur d'identification (K1) à un système de personnalisation, la valeur d'identification (K1) est mémorisée par le système de personnalisation sur un support de données portable;
c) après transmission du support de données portable (1) du système de personnalisation à l'utilisateur ou à un point de délivrance, un jeu de données biométrique (BV2) d'une personne est à nouveau saisi, une valeur d'identification (K2) étant à nouveau calculée à partir du jeu de données biométrique (BV2) à nouveau saisi, avec la méthode de calcul donnée, puis comparée avec la valeur d'identification (K1) mémorisée sur le support de données portable (1), le jeu de données biométrique (BV2) à nouveau saisi étant, en cas d'une concordance suffisante entre les valeurs d'identification (K1, K2), mémorisé sur le support de données portable (1).

2. Procédé selon la revendication 1, **caractérisé en ce que** la valeur d'identification (K1) est une combinaison de plusieurs signes, notamment une combinaison de chiffres et/ou de lettres.

3. Procédé selon la revendication 1 ou 2, **caractérisé en ce que** le jeu de données biométrique (BV1) saisi à l'étape a) est effacé après le calcul de la valeur d'identification (K1).

4. Procédé selon une des revendications précédentes, **caractérisé en ce que** la valeur d'identification (K1) calculée à l'étape a) est transmis électroniquement au système de personnalisation.

5. Procédé selon une des revendications précédentes, **caractérisé en ce que** la valeur d'identification (K1) calculée à l'étape a) est délivrée à l'utilisateur par l'intermédiaire d'un moyen de délivrance, notamment d'une unité d'affichage, l'utilisateur occasionnant la transmission, au système de personnalisation, de la valeur d'identification (K1) délivrée.

6. Procédé selon une des revendications précédentes, **caractérisé en ce que**, outre la valeur d'identification (K1), d'autres données utilisateur sont mémorisées sur le support de données portable (1).

7. Procédé selon une des revendications précédentes, **caractérisé en ce que** l'étape a) est réitérée plusieurs fois, ce qui fait que plusieurs valeurs d'identification (K1) sont obtenues, la valeur d'identification (K1) réutilisée à l'étape b) étant celle qui est le plus fréquemment déterminée.

8. Procédé selon une des revendications précédentes, **caractérisé en ce que**, en cas d'une concordance insuffisante entre les valeurs d'identification (K1, K2) à l'étape c), la saisie du jeu de données biométrique (BV2) et le calcul de la valeur d'identification (K2) peut être réitéré un nombre de fois prédéterminé, la valeur d'identification (K2) à nouveau calculée étant après chaque réitération comparée encore une fois avec la valeur d'identification (K1) mémorisée sur le support de données portable, afin de, en cas d'une concordance suffisante entre les valeurs d'identification (K1, K2), mémoriser sur le support de données portable (1) le jeu de données biométrique (BV2) nouvellement saisi à partir duquel la valeur d'identification (K2) nouvellement saisie fut calculée.

9. Procédé selon une des revendications précédentes, **caractérisé en ce que** la valeur d'identification (K1) mémorisée sur le support de données
portable (1) est effacée du support de données portable (1) pendant ou après la mémorisation du jeu de données biométrique (BV2) à l'étape c).

10. Procédé selon une des revendications précédentes, dans lequel le jeu de données biométrique (BV1, BV2) est généré à l'étape a) et/ou à l'étape c) à partir d'une empreinte digitale et/ou d'un scan iridien.

11. Système de personnalisation d'un support de données portable (1), notamment d'une carte à puce, avec des données biométriques, comprenant :
- un premier moyen de saisie et de calcul pour la saisie d'un jeu de données biométrique (BV1) d'un utilisateur et pour le calcul, à partir du jeu de données biométrique (BV1), avec une méthode de calcul donnée, d'une valeur d'identification (K1) affectée univoquement au jeu de données biométrique (BV1) et dont le jeu de données biométrique (BV1) ne peut pas être déduit ;
- un système de personnalisation pour la mémorisation de la valeur d'identification (K1) sur un support de données portable (1) après la transmission de la valeur d'identification (K1) au système de personnalisation ;
- un deuxième moyen de saisie et de calcul pour la nouvelle saisie d'un jeu de données biométrique (BV2) d'une personne après transmission du support de données portable (1) du système de personnalisation à l'utilisateur ou à un point de délivrance, une valeur d'identification (K2) étant à nouveau calculée, avec le deuxième moyen de saisie et de calcul, à partir du jeu de données biométrique (BV1) à nouveau saisi, avec la méthode de calcul donnée, puis comparée avec la valeur d'identification (K1) mémorisée sur le support de données portable (1), le jeu de données biométrique à nouveau saisi étant, en cas d'une concordance suffisante entre les valeurs d'identification (K1, K2), mémorisé sur le support de données portable (1).

12. Système selon la revendication 11, **caractérisé en ce que** le système est réalisé de telle manière qu'un procédé selon une des revendications de 2 à 10 est exécutable avec le système.

13. Système selon la revendication 11 ou 12, **caractérisé en ce que** le premier et/ou deuxième moyen de saisie et de calcul sont intégrés dans un terminal, notamment dans un appareil de radiocommunication mobile.

14. Système selon une des revendications de 11 à 13, **caractérisé en ce que** le système de personnalisation est un point central de personnalisation auquel sont transmises des valeurs d'identification (K1, K2) d'une pluralité de différents utilisateurs.
